# EUROPÄISCHE PATENTSCHRIFT

(11) **EP 2 552 757 B1**
(45) Veröffentlichungstag und Bekanntmachung des Hinweises auf die Patenterteilung: **07.05.2014**
(21) Anmeldenummer: 11711085.8
(22) Anmeldetag: 29.03.2011
(51) Int. Cl.: B60T 11/16, B60T 11/18, B60T 11/20, B60T 11/224, B60T 11/228

(54) **BREMSANLAGE FÜR KRAFTFAHRZEUGE**
BRAKE SYSTEM FOR MOTOR VEHICLES
SYSTÈME DE FREINAGE POUR VÉHICULES AUTOMOBILES

(30) Priorität: 29.03.2010 DE 102010003380
(43) Veröffentlichungstag der Anmeldung: 06.02.2013
(73) Patentinhaber: Continental Teves AG & Co. oHG, 60488 Frankfurt (DE)
(72) Erfinder: SCHIEL, Lothar, 65719 Hofheim (DE)
(86) Internationale Anmeldenummer: PCT/EP2011/054798
(87) Internationale Veröffentlichungsnummer: WO 2011/120955

(56) Entgegenhaltungen:
- DE-A1-102006 040 424
- DE-A1-102009 033 499
- US-A- 3 946 564

## Beschreibung

Die Erfindung betrifft eine Bremsanlage für Kraftfahrzeuge vom Typ "Brake-by-Wire" mit einem mittels eines Bremspedals betätigbaren Hauptbremszylinder mit einem Gehäuse und einem in dem Gehäuse verschiebbar angeordneten Kolben, welcher zusammen mit dem Gehäuse einen Druckraum begrenzt, an dem Radbremsen angeschlossen sind, einem drucklosen Druckmittelvorratsbehälter, einem mit dem Hauptbremszylinder zusammenwirkenden hydraulisch betätigbaren Wegsimulator mit mindestens einem elastischen Element, welcher, insbesondere in einer Betriebsart "Brake-by-wire", dem Fahrzeugführer ein angenehmes Pedalgefühl vermittelt, einer elektrisch steuerbaren, pneumatischen, elektrischen bzw. elektrohydraulischen Betätigungseinheit zur Beaufschlagung der Radbremsen mit Druck, einer Druckregelventilanordnung zur Regelung und/oder Steuerung eines an einer Radbremse eingesteuerten Radbremsdruckes und einer elektronischen Steuer- und Regeleinheit, welche die Betätigungseinheit und/oder die Druckregelventilanordnung steuert oder regelt.

In der Kraftfahrzeugtechnik finden "Brake-by-Wire"-Bremssysteme eine immer größere Verbreitung. Eine gattungsgemäße elektrohydraulische Bremsanlage für Kraftfahrzeuge vom Typ "Brake-by-Wire" ist beispielsweise aus der DE 102 35 288 A1, sowie aus der DE 102 007 049 620 A1 bekannt.

In Brake-by-Wire-Bremssystemen wird der erforderliche Bremsdruck bei Betriebsbremsungen ohne direkte Beteiligung des Fahrzeugführers von der pneumatischen, elektrischen bzw. elektrohydraulischen Betätigungseinheit bereitgestellt. Dem Fahrzeugführer wird durch den sogenannten Wegsimulator das von herkömmlichen Bremssystemen bekannte Pedalgefühl vermittelt. Bei Ausfall der by-Wire-Einheit bzw. der Elektrik / Elektronik wird das Fahrzeug durch den hydraulischen Druck abgebremst, den der Fahrzeugführer ausschließlich mit Muskelkraft im hydraulischen Hauptbremszylinder (unverstärkte Rückfallebene) erzeugt.

Der vorliegenden Erfindung liegt die Aufgabe zugrunde, eine Bremsanlage für Kraftfahrzeuge vom Typ "Brake-by-Wire" bereitzustellen, die es ermöglicht, in der unverstärkten Rückfallebene trotz der gesetzlichen Pedalkraftlimitierung von 500N auch große und schwere Fahrzeuge mit einem ergonomisch optimierten Pedalweg bis zur Blockiergrenze abbremsen zu können.

Diese Aufgabe wird erfindungsgemäß dadurch gelöst, dass der Kolben des Hauptbremszylinders als Stufenkolben mit mindestens zwei unterschiedlich großen hydraulischen Wirkflächen ausgebildet ist, wobei der Druckraum eine erste, kleine Wirkfläche und einem Füllraum ein zweite, große Wirkfläche zugeordnet ist und nach Überwindung eines Schließweges die zweite, große hydraulische Wirkfläche wirksam ist und eine Umschaltung der Wirkflächen in Abhängigkeit von einem hydraulischen Druck in dem Druckraum bzw. der Pedalkraft erfolgt.

Nach Überwindung des auch im Normalbetrieb (Betriebsart "Brake-by-Wire") vorhandenen Schließweges am Kolben wird sofort und stetig Bremsdruck in den Radbremskreisen aufgebaut. Die vom Fahrzeugführer eingebrachte Betätigungskraft wird direkt und verlustfrei zum Druckaufbau in den Bremskreisen verwendet.

Weitere Merkmale, Vorteile und Anwendungsmöglichkeiten der Erfindung gehen aus den Unteransprüchen und der nachfolgenden Beschreibung eines Ausführungsbeispiels sowie anhand der Zeichnung hervor.

Es zeigt schematisch:
- Fig. 1: ein Hauptbremszylinder eines Ausführungsbeispiel einer erfindungsgemäßen Bremsanlage und
- Fig. 2: eine Darstellung der Charakteristik der erfindungsgemäßen Bremsanlage in der Rückfallebene.

Eine erfindungsgemäße Bremsanlage für Kraftfahrzeuge vom Typ "Brake-by-Wire" umfasst einen mittels eines nicht gezeigten Bremspedals betätigbaren Hauptbremszylinder 1 mit einem Gehäuse 2 und einem in dem Gehäuse 2 verschiebbar angeordneten Kolben 3, welcher zusammen mit dem Gehäuse 2 einen Druckraum 4 begrenzt. An dem Hauptbremszylinder 1 bzw. an dem Druckraum 4 sind in bekannter Weise nicht dargestellte Radbremsen angeschlossen.

Weiter umfasst die Bremsanlage einen drucklosen Druckmittelvorratsbehälter 5 sowie einen mit dem Hauptbremszylinder 1 zusammenwirkenden hydraulisch betätigbaren Wegsimulator mit mindestens einem elastischen Element, welcher, insbesondere in einer Betriebsart "Brake-by-Wire", dem Fahrzeugführer ein angenehmes Pedalgefühl vermittelt.

Eine elektronischen Steuer- und Regeleinheit steuert oder regelt eine pneumatische, elektrische bzw. elektrohydraulische Betätigungseinheit zur Beaufschlagung der Radbremsen mit Druck und eine Druckregelventilanordnung zur Regelung und/oder Steuerung des an den Radbremsen eingesteuerten Radbremsdruckes.

Die grundsätzliche Funktion und der grundsätzliche Aufbau einer Bremsanlage für Kraftfahrzeuge vom Typ "Brake-by-Wire" sind bekannt, so dass auf eine dahingehende Beschreibung verzichtet wird. Im nachfolgenden wird daher lediglich auf die erfindungswesentlichen Merkmale eingegangen.

Bei Ausfall der by-Wire-Einheit bzw. der Elektrik oder der Elektronik wird das Fahrzeug durch den hydraulischen Druck abgebremst, den der Fahrzeugführer ausschließlich mit Muskelkraft im hydraulischen Hauptbremszylinder erzeugt. Dies stellt die unverstärkte Rückfallebene dar.

Gerade große und schwere Fahrzeuge, die immer mehr Verbreitung finden, sind dabei kaum mehr mit der gesetzlichen Pedalkraftlimitierung von 500N und mit einem kurzen Pedalweg abzubremsen.

Der vorliegenden Erfindung liegt somit die Aufgabe zugrunde, eine Bremsanlage für Kraftfahrzeuge vom Typ "Brake-by-Wire" bereitzustellen, die es ermöglicht, in der unverstärkten Rückfallebene trotz der gesetzlichen Pedalkraftlimitierung von 500N auch große und schwere Fahrzeuge mit einem ergonomisch optimierten Pedalweg bis zur Blockiergrenze abbremsen zu können.

Der Kolben 3 des Hauptbremszylinders 1 ist erfindungsgemäß als Stufenkolben mit zwei unterschiedlich großen hydraulischen Wirkflächen A1, A2 ausgebildet ist. Dem Druckraum 4 ist die erste, kleine Wirkfläche A1 und einem Füllraum 6 ist die zweite, große Wirkfläche A2 zugeordnet. Im Rahmen der Erfindung ist es denkbar, drei und mehr Stufen am Kolben 3 vorzusehen, so dass drei und mehr unterschiedlich große hydraulische Wirkflächen A1, A2, A3 bis An ausgebildet sind, welche registerartig nacheinander abgeschaltet werden.

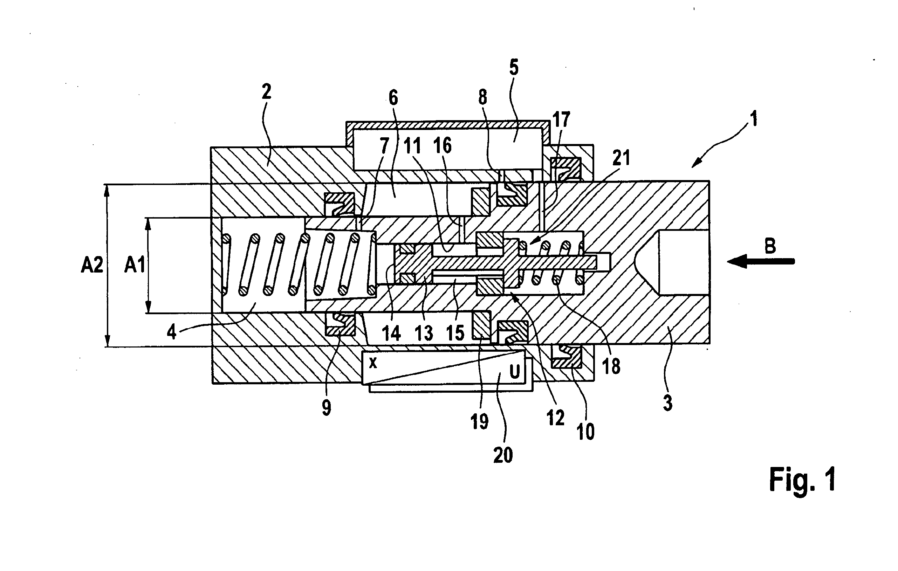

Beide Räume 4,6 sind in einer in Fig. 1 dargestellten unbetätigten Stellung des Hauptbremszylinders 1 mit dem drucklosen Druckmittelbehälter 5 verbunden. Wie aus Fig. 1 ersichtlich ist, weist der Kolben 3 in einem Bereich der ersten, kleinen Wirkfläche A1 eine (oder mehrere) erste Verbindungsbohrung 7 auf, welche den Druckraum 4 mit dem Füllraum 6 in der unbetätigten Stellung verbindet. Gleichzeitig ist der Füllraum 6 über eine Verbindungsleitung 8 mit dem Druckmittelbehälter 5 verbunden. Wird der Kolben 3 durch eine Betätigung des Bremspedals in Betätigungsrichtung B verschoben, werden die Verbindungsbohrungen 7 und die Verbindungsleitung 8 durch Überfahren von Dichtmanschetten 9,10 unterbrochen und es kann im Druckraum 4 ein hydraulischer Druck aufgebaut werden. Nach Überwindung eines Schließweges ist somit die zweite, große hydraulische Wirkfläche A2 wirksam.

So kann die Bremsanlage über einen kurzen Pedalweg gefüllt und eine Fahrzeugverzögerung von rund 0,3g erreicht werden und die vom Fahrzeugführer eingebrachte Betätigungskraft wird direkt und verlustfrei zum Druckaufbau in den Bremskreisen verwendet.

Die Umschaltung der Wirkflächen von A2 zu A1 erfolgt in Abhängigkeit von einem hydraulischen Druck in dem Druckraum 4 bzw. von der Pedalkraft.

Hierzu ist eine Ventilanordnung 21 vorgesehen, die in einer Zentralbohrung 11 des Kolbens 3 angeordnet ist. Die Ventilanordnung 21 umfasst, wie aus Fig. 1 ersichtlich ist, ein Zentralventil 12 mit einem Schaltkolben 13, wobei der Schaltkolben 13 an seiner Stirnfläche 14 mit dem Druck des Druckraumes 4 beaufschlagt ist. Weiter begrenzt der Schaltkolben 13 eine Schaltkammer 15, welche über eine zweite in dem Kolben 3 ausgebildete Verbindungsbohrung 16 mit dem Füllraum 6 in Verbindung steht.

Wird der Schaltkolben 13 durch den Druck in dem Druckraum 4 gegen den Druck einer Schaltfeder 18 entgegen der Betäti-gungsrichtung B in der Zeichnung nach rechts verschoben, öffnet sich das Zentralventil 12 und verbindet die Schaltkammer 15 über eine dritte im Kolben 3 ausgebildete Verbindungsbohrung 17 mit dem Druckmittelbehälter 5, so dass nur noch die erste, kleine hydraulische Wirkfläche A1 des Kolbens 3 wirksam ist.

Nach Erreichen einer Fahrzeugverzögerung von rund 0,3g wird damit die wirksame Fläche des Hauptbremszylinders 1 auf die kleinere Wirkfläche A1 umgeschaltet. Dies ermöglicht dem Fahrzeugführer, über die kleine Wirkfläche A1 des Kolbens 3 mit der gesetzlich erlaubten 500N Pedalkraft je nach Bremsanlage und Masse des Fahrzeuges eine Abbremsung bis zur Blockiergrenze zu erreichen. Dabei kann der Pedalweg im ergonomisch optimalen Bereich bis 100mm gehalten werden.

Sind drei und mehr Wirkflächen A1 bis An am Kolben 3 vorgesehen, ist es denkbar die Ventilanordnungen auch in parallel zur Zentralbohrung 11 ausgeführten Bohrungen anzuordnen mit Verbindung jeweils zum kleinsten Druckraum 4 und zum Druckmittelbehälter 5.

Zur Erfassung des Betätigungsweges des Hauptbremszylinders 1 ist eine Sensorvorrichtung zur Erfassung von Bewegung und Position des Kolbens 3 vorgesehen, welche mit der elektronischen Steuer- und Regeleinheit verbindbar ist. Wie aus Fig. 1 ersichtlich ist, ist an dem Kolben 3 ein Signalgeber 19 beispielsweise in Form eines Magneten angeordnet und ein Sensorelement 20 ist ortsfest an dem Gehäuse 2 befestigt. Mit Hilfe der Sensorvorrichtung ist es möglich, den Weg des Kolbens 3 zu sensieren und eine Fahrerwunscherkennung bzw. eine Sollwertgenerierung zu realisieren.

Vorteilhafterweise kann der Druckmittelbehälter 5 in das Gehäuse 2 des Hauptbremszylinders 1 integriert vorgesehen sein.

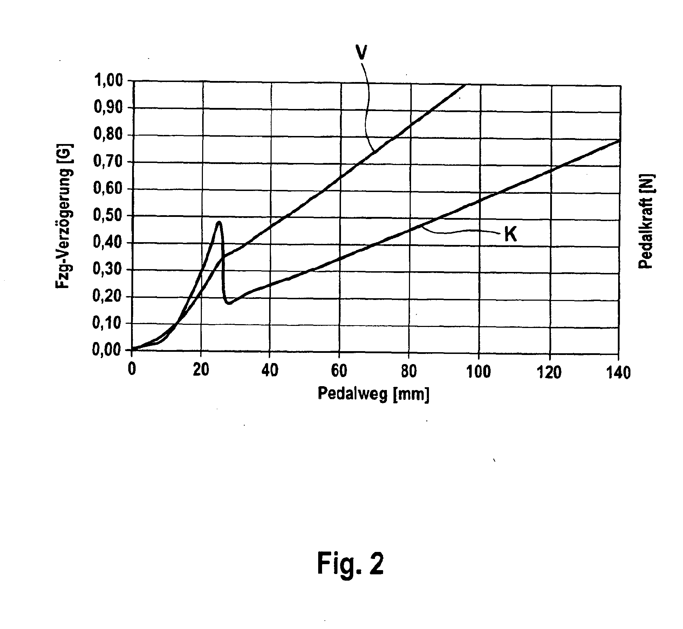

Aus Fig. 2 ist ferner eine beispielhafte Darstellung einer Pedalweg-Pedalkraft-Kennlinie K und einer Pedalweg-Fahrzeug-Verzögerung-Kennlinie V der erfindungsgemäßen Bremsanlage in der Rückfallebene z.B. bei Bordnetz-Ausfall zu entnehmen.

### Bezugszeichenliste

- 1: Hauptbremszylinder
- 2: Gehäuse
- 3: Kolben
- 4: Druckraum
- 5: Druckmittelbehälter
- 6: Füllraum
- 7: Verbindungsbohrung
- 8: Verbindungsleitung
- 9: Dichtmanschette
- 10: Dichtmanschette
- 11: Zentralbohrung
- 12: Zentralventil
- 13: Schaltkolben
- 14: Stirnfläche
- 15: Schaltkammer
- 16: Verbindungsbohrung
- 17: Verbindungsbohrung
- 18: Schaltfeder
- 19: Signalgeber
- 20: Sensorelement
- 21: Ventilanordnung
- B: Betätigungsrichtung
- K: Pedalweg-Pedalkraft-Kennlinie
- V: Pedalweg-Fahrzeug-Verzögerung-Kennlinie

## Patentansprüche

1. Bremsanlage für Kraftfahrzeuge vom Typ "Brake-by-Wire" mit einem mittels eines Bremspedals betätigbaren Hauptbremszylinder (1) mit einem Gehäuse (2) und einem in dem Gehäuse (2) verschiebbar angeordneten Kolben (3), welcher zusammen mit dem Gehäuse (2) einen Druckraum (4) begrenzt, an dem Radbremsen angeschlossen sind, einem drucklosen Druckmittelvorratsbehälter (5), einem mit dem Hauptbremszylinder (1) zusammenwirkenden hydraulisch betätigbaren Wegsimulator mit mindestens einem elastischen Element, welcher, insbesondere in einer Betriebsart "Brake-by-Wire", dem Fahrzeugführer ein angenehmes Pedalgefühl vermittelt, einer elektrisch steuerbaren, pneumatischen, elektrischen bzw. elektrohydraulischen Betätigungseinheit zur Beaufschlagung der Radbremsen mit Druck, einer Druckregelventilanordnung zur Regelung und/oder Steuerung eines an einer Radbremse eingesteuerten Radbremsdruckes und einer elektronischen Steuer- und Regeleinheit, welche die Betätigungseinheit und/oder die Druckregelventilanordnung steuert oder regelt, **dadurch gekennzeichnet, dass** der Kolben (3) des Hauptbremszylinders (1) als Stufenkolben mit mindestens zwei unterschiedlich großen hydraulischen Wirkflächen (A1, A2) ausgebildet ist, wobei dem Druckraum (4) eine erste, kleine Wirkfläche (A1) und einem Füllraum (6) ein zweite, große Wirkfläche (A2) zugeordnet ist und nach Überwindung eines Schließweges die zweite, große hydraulische Wirkfläche (A2) wirksam ist und eine Umschaltung der Wirkflächen (A2, A1) in Abhängigkeit von einem hydraulischen Druck in dem Druckraum (4) bzw. der Pedalkraft erfolgt.

2. Bremsanlage nach Anspruch 1, **dadurch gekennzeichnet, dass** die Umschaltung der Wirkflächen (A2, A1) mittels einer Ventilanordnung (21) erfolgt.

3. Bremsanlage nach Anspruch 2, **dadurch gekennzeichnet, dass** die Ventilanordnung (21) ein in einer Zentralbohrung(11) des Kolbens (3) angeordnetes Zentralventil (12) mit einem Schaltkolben (13) aufweist, wobei der Schaltkolben (13) mit dem Druck dem Druckraum (4) beaufschlagt ist und welcher eine mit dem Füllraum (6) in Verbindung stehende Schaltkammer (15) begrenzt, welche in einer Öffnungsstellung des Zentralventils (12) mit dem Druckmittelbehälter (5) verbunden ist.

4. Bremsanlage nach Anspruch 3, **dadurch gekennzeichnet, dass** der Hauptbremszylinder (1) eine Sensorvorrichtung zur Erfassung von Bewegung und Position des Kolbens (3) aufweist, wobei an dem Kolben (3) ein Signalgeber (19) angeordnet ist und ein Sensorelement (20) an dem Gehäuse befestigt ist.

5. Bremsanlage nach einem der Ansprüche 1 bis 4, **dadurch gekennzeichnet, dass** der Druckmittelbehälter (5) in das Gehäuse (2) des Hauptbremszylinders (1) integriert vorgesehen ist.

## Claims

1. Brake system for motor vehicles of the "brake-by-wire" type, with a brake master cylinder (1) which can be activated by means of a brake pedal, with a housing (2) and a piston (3) arranged displaceably in the housing (2), which together with the housing (2) delimits a pressure chamber (4) to which wheel brakes are connected, a pressureless pressurized medium storage reservoir (5), a hydraulically activatable travel simulator which cooperates with the brake master cylinder (1) and comprises at least one elastic element, which, in particular in a "brake-by-wire" operating mode, gives the vehicle driver a pleasant pedal feel, an electrically controllable, pneumatic, electric or electrohydraulic actuator unit for pressurizing the wheel brakes, a pressure regulator valve assembly for regulation and/or control of a wheel brake pressure set at a wheel brake, and an electronic control and regulating unit which controls or regulates the actuator unit and/or the pressure regulator valve assembly,
**characterized in that** the piston (3) of the brake master cylinder (1) is formed as a stepped piston with at least two hydraulic active surfaces (A1, A2) of different sizes, wherein a first, small active surface (A1) is allocated to the pressure chamber (4) and a second, large active surface (A2) is allocated to a filling chamber (6), and the second, large, hydraulic active surface (A2) is active after overcoming a closing travel, and switching of the active surfaces (A2, A1) takes place depending on a hydraulic pressure in the pressure chamber (4) or the pedal force.

2. Brake system according to Claim 1, **characterized in that** the switching of the active surfaces (A2, A1) takes place by means of a valve assembly (21).

3. Brake system according to Claim 2, **characterized in that** the valve assembly (21) comprises a central valve (12) arranged in a central bore (11) of the piston (3) with a switching piston (13), wherein the switching piston (13) is exposed to the pressure of the pressure chamber (4) and delimits a switching chamber (15) which is connected with the filling chamber (6) and in an open position of the central valve (12) is connected with the pressurized medium reservoir (5).

4. Brake system according to Claim 3, **characterized in that** the brake master cylinder (1) comprises a sensor device to detect movement and position of the piston (3), wherein a signal emitter (19) is arranged on the piston (3), and a sensor element (20) is attached to the housing.

5. Brake system according to any of Claims 1 to 4, **characterized in that** the pressurized medium reservoir (5) is provided integrated in the housing (2) of the brake master cylinder (1).

## Revendications

1. Installation de freinage pour véhicules automobiles du type de frein à câble ("Brake by Wire"), comprenant un cylindre de frein principal (1) pouvant être actionné au moyen d'une pédale de frein avec un boîtier (2) et un piston (3) disposé de manière déplaçable dans le boîtier (2), qui limite avec le boîtier (2) un espace de pression (4) auquel se raccordent des freins de roue, un réservoir de fluide sous pression non pressurisé (5), un simulateur de course pouvant être commandé hydrauliquement et coopérant avec le cylindre de frein principal (1) avec au moins un élément élastique qui, notamment dans un mode de fonctionnement de frein à câble, communique au conducteur une sensation agréable de la pédale, une unité d'actionnement pneumatique, électrique ou électro-hydraulique pouvant être commandée électriquement pour solliciter les freins de roue avec une pression, un agencement de soupape de régulation de pression pour réguler et/ou commander une pression des freins de roue introduite par la commande au niveau d'un frein de roue et une unité de commande et de régulation électronique qui commande ou régule l'unité d'actionnement et/ou l'agencement de soupape de régulation de pression, **caractérisée en ce que** le piston (3) du cylindre de frein principal (1) est réalisé sous forme de piston étagé avec au moins deux surfaces actives hydrauliques de tailles différentes (A1, A2), une première petite surface active (A1) étant associée à l'espace de pression (4) et une deuxième grande surface active (A2) étant associée à un espace de remplissage (6) et après avoir parcouru une course de fermeture, la deuxième grande surface active hydraulique (A2) est active et il se produit une commutation des surfaces actives (A2, A1) en fonction d'une pression hydraulique dans l'espace de pression (4) ou de la force de la pédale.

2. Installation de freinage selon la revendication 1, **caractérisée en ce que** la commutation des surfaces actives (A2, A1) s'effectue au moyen d'un agencement de soupape (21).

3. Installation de freinage selon la revendication 2, **caractérisée en ce que** l'agencement de soupape (21) présente une soupape centrale (12) disposée dans un alésage central (11) du piston (3) avec un piston de commutation (13), le piston de commutation (13) étant sollicité avec la pression de l'espace de pression (4) et limitant une chambre de commutation (15) en liaison avec l'espace de remplissage (6) qui est connectée au récipient de fluide sous pression (5) dans une position d'ouverture de la soupape centrale (12).

4. Installation de freinage selon la revendication 3, **caractérisée en ce que** le cylindre de freinage principal (1) présente un dispositif de capteur pour détecter le mouvement et la position du piston (3), un transducteur (19) étant disposé sur le piston (3) et un élément de capteur (20) étant fixé sur le boîtier.

5. Installation de freinage selon l'une quelconque des revendications 1 à 4, **caractérisée en ce que** le récipient de fluide sous pression (5) est intégré dans le boîtier (2) du cylindre de frein principal (1).
